# EUROPEAN PATENT SPECIFICATION

(11) **EP 2 461 592 B1**
(45) Date of publication and mention of the grant of the patent: **25.12.2019**
(21) Application number: 11009337.4
(22) Date of filing: 24.11.2011
(51) Int. Cl.: H04N 9/31

(54) **A timing solution for projector camera devices and systems**
Zeitlösung für Projektorkameravorrichtungen und Systeme
Solution de minutage pour dispositifs et systèmes de projecteur et de caméra

(30) Priority: 01.12.2010 US 957742
(43) Date of publication of application: 06.06.2012
(73) Proprietor: Sony Ericsson Mobile Communications AB, 221 88 Lund (SE)
(72) Inventor: Östlund, Petter, 226 48 Lund (SE); Ek, Martin, 247 55 Dalby (SE)
(74) Representative: Banzer, Hans-Jörg

(56) References cited:
- JP-A- 2010 224 509
- US-A1- 2009 184 943
- BAPTISTE COULANGE ET AL: "An aliasing detection algorithm based on suspicious colocalizations of Fourier coefficients", 2010 17TH IEEE INTERNATIONAL CONFERENCE ON IMAGE PROCESSING (ICIP 2010); 26-29 SEPT. 2010; HONG KONG, CHINA, IEEE, PISCATAWAY, NJ, USA, 26 September 2010 (2010-09-26), pages 2013-2016, XP031812765, ISBN: 978-1-4244-7992-4

## Description

### FIELD OF THE INVENTION

The present invention relates generally to digital cameras equipped to record a projected image, and particularly to methods of detecting gestures illuminated by the projected image.

### BACKGROUND

Digital cameras are well-known devices that allow users to capture images, and in some cases, video. In addition to these conventional functions, an emerging technology also allows digital camera to also function as a projector. Particularly, a device called a "pico-projector" is a very small projection system integrated within the housings of the digital camera. When equipped with a pico-projector, a digital camera can project "scaled-up" versions of the images and video it captures onto a flat external surface, such as the side of a wall or a movie screen, for display to other people.

Often times, people will stand in front or to the side of a projected image and point or make other gestures with a hand, tool, or other indicator to note important text, pictures, or other items that are visible in the projected image. Additionally, some people may want to record the projected image to detect these gestures. However, the projected image will illuminate the object that is used to make the gesture (i.e., the hand or a tool). If the pico-projector is not synchronized to the digital camera, certain well-known interference patterns can occur. One such pattern is known as a Moire pattern and can interfere with the detecting the gestures.

US 2009/184943 A1 relates to a method for displaying information on a display surface, and for tracking a laser pointer on the displayed image. Before the image is displayed, however, the properties of the display surface are first identified. To accomplish this, a "stripe pattern" is projected during operation, and filtering out that stripe pattern using a Gabor filter. Removing the stripe pattern, however, can cause "shadowing," which is continuously removed automatically by performing a shadow avoidance procedure. The result is screen content that is consistently visible.

JP 2010 224509 A provides a device having a projector and a camera. The projector projects an image, while the camera captures an image of the projected image. A processor analyzes both the captured image and the projected image in order to detect whether any objects seen in the projected image were actually output by the projector, and limits the output of the projector based on that determination.

BAPTISTE COULANGE ET AL.: "an aliasing detection algorithm based on suspicious colocalizations of Fourier coefficients" discloses a method for detecting the presence and the localization of aliasing in a single digital image. The method operates largely on the realization that two frequencies in aliasing relation, which are contributing to similar parts of an image in the Fourier domain, is a suspicious coincidence. So detected, the method can control the number of false alarms.

### SUMMARY

The invention is defined by the appended claims.

### BRIEF DESCRIPTION OF THE DRAWINGS

Figure 1 is a perspective view illustrating an imaging system that projects images and/or video onto an external display surface, and then records hand gestures illuminated by the projected images according to one embodiment of the present invention.
Figure 2 is a perspective view illustrating a Moire pattern of the type that is reduced or eliminated when using a method of one embodiment of the present invention.
Figure 3 is a block diagram illustrating some of the component parts of an imaging system configured to operate according to one embodiment of the present invention.
Figure 4 is a flow diagram illustrating how an imaging system synchronizes the projector with the digital camera to reduce or eliminate interference patterns according to one embodiment of the present invention.
Figure 5 is a flow diagram illustrating how an imaging system tunes the synchronization according to one or more embodiments of the present invention.
Figure 6 is a perspective view illustrating an imaging system configured to operate according to another of the present invention.
Figure 7 is a perspective view illustrating an imaging system that projects images and/or video onto an external display surface, and then records hand gestures occurring in the projected images according to one embodiment of the present invention.

### DETAILED DESCRIPTION

The present invention provides a method that more accurately detects gestures that are in or illuminated by projected images by synchronizing the timing between a projecting device and a recording device. The gestures may be any gesture known in the art and be made by any object. However, in one embodiment, the gestures are made by a part of a person's body. For example, in one embodiment, the gestures are hand gestures that point or draw attention to certain objects or items in the projected image, and be made by people standing proximate the projected image. In another embodiment, the gesture is made by a tool or other indicator that is in or illuminated by the projected image, and is controlled and/or operated by a user. It should be noted that the following description and the figures illustrate the gesture as being a hand gesture; however, this is for illustrative purposes only. Those skilled in the art will appreciate that, as stated above, the gestures need not be only hand gestures, but rather can be gestures made using a tool or other indicator as needed or desired.

Particularly, the present invention comprises an imaging system that incorporates an image projection device and an image recording device. The projecting device may be, for example, a pico-projector that projects an image onto an external display surface such as a wall or movie screen. The image recording device may comprise a digital camera, for example, that records the projected image and the gesture in or illuminated by the projected image. Often times, a moving hand, tool, or object can create undesirable interference patterns, such as Moire patterns, to be visible in the recorded content. Such patterns can interfere with the analysis of the recorded content, and therefore, interfere with the ability to accurately detect the gestures made by a person standing proximate the projected image. Therefore, while the digital camera records the projected image, the present invention synchronizes a timing of the projector with a start of the exposure of the digital camera. This reduces or eliminates the interference patterns associated with recording the gestures, and allows digital image processors to more accurately analyze and detect the gestures in the recorded content.

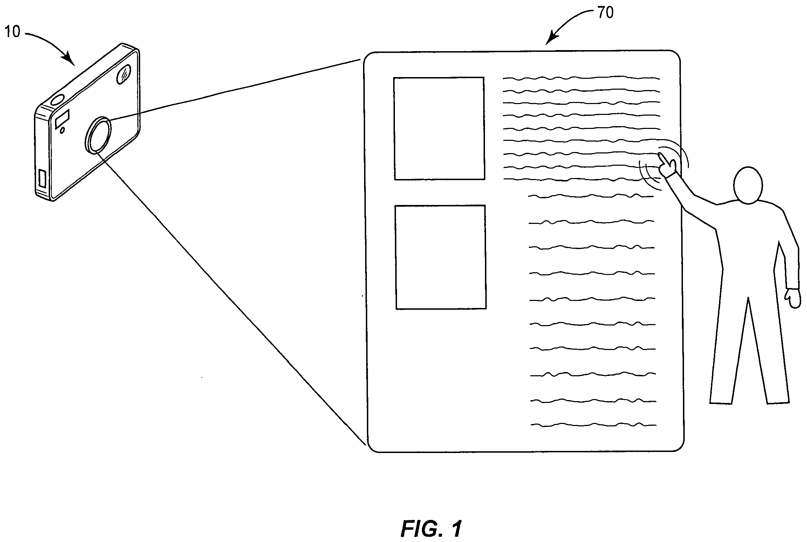

Turning now to the drawings, Figure 1 illustrates a perspective view of a handheld, portable, imaging system 10 configured to include a pico-projector and a digital camera according to one embodiment of the present invention. As seen in Figure 1, a user can employ the pico-projector of imaging system 10 to project a video image 70 on a flat display surface such as a wall or screen, for example. The video image 70 being projected may be stored in and provided by the digital camera, or, as is seen in more detail later, by another device that is independent of the imaging system 10.

In Figure 1, a person is standing proximate the projected video image 70 and making hand gestures to point to objects or items of interest in the video image 70. The user's hand gestures are illuminated by the projected video image 70. The digital camera of imaging system 10 records these illuminated hand gestures along with the video image 70, and then analyzes the content to detect the hand gestures. However, while recording the illuminated hand gestures, interference patterns may obscure the hand gestures. The present invention detects these patterns and synchronizes the timing between the projector and the digital camera to "filter" the interference patterns out of the recorded image content. The "filtered" image is then passed to an image processing function where the presence of the hand gestures is more easily detected.

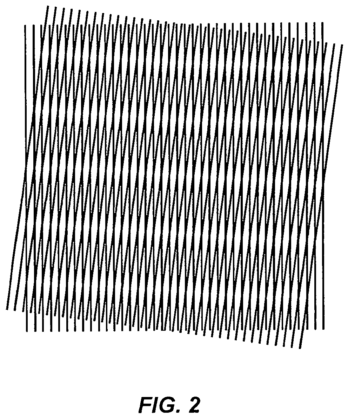

One type of interference pattern that can be avoided by the present invention is seen in Figure 2 and is known as a "Moire" pattern. Moire patterns tend to interfere with the imaging system's 10 ability to analyze the recorded images. As such, it can be difficult for imaging system 10 to accurately detect a hand gesture that is in or is illuminated by the projected image. Moire patterns can be produced by various digital imaging and computer graphics techniques, and may also be generated when the timing of the projector and the digital camera are not synchronized. Generally, Moire patterns consist of a plurality of dark stripes that obscure the user's illuminated hand. The stripes, which may be vertical, and/or horizontal, and/or arcuate interfere with the ability to analyze the images to detect the hand gestures.

Manufacturers of devices that are able to record projected images, such as the imaging system 10, for example, typically desire projectors (i.e., pico-projectors) that are as compact as possible to facilitate the integration of a projection device and an image capturing device into a single unit. Some devices, such as conventional scanning devices, are already faced with the problem of removing Moire patterns from images. However, those devices are not required to detect hand gestures that are in or are illuminated by video images. Further, they typically utilize hardware components such as de-screening filters to remove Moire patterns from their images. Such filters are "extra" components that increase both the size and the draw on the limited power resources available to the device. Therefore, instead of using conventional filter components to remove interference patterns, the present invention utilizes a signal to synchronize the timing between the projector and the digital camera.

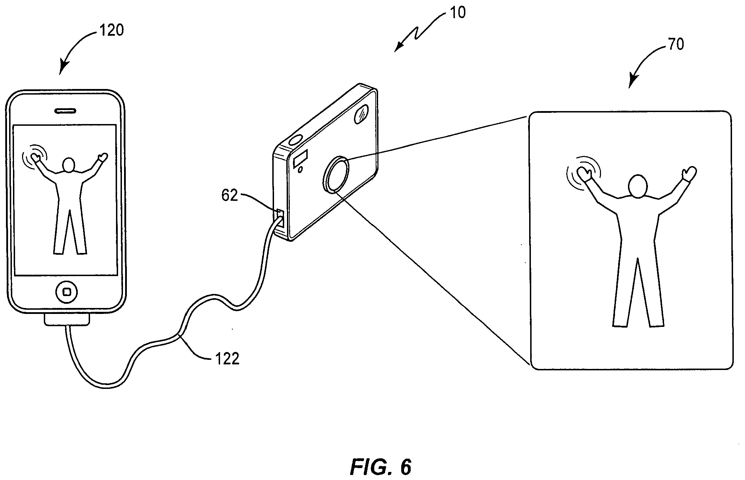

The control signal is generated to synchronize the refresh rate of the projector to the exposure time of the digital camera. The control signal is generated using any known method and/or component. However, in one embodiment, the control signal may be generated by a hardware component integrated into the digital camera part of the imaging system 10, such as an image processor, for example. Alternatively, it may be a signal generated by a controller in the imaging system 10 that is connected to both the pico-projector and the digital camera. In these first two scenarios, the pico-projector simply receives the generated control signal and performs a process to synchronize its refresh rate with the exposure time of the digital camera. However, in another embodiment, the pico-projector includes circuitry that generates the control signal used in the synchronization process. In yet another embodiment, seen later in Figure 6, the control signal is generated and sent to the imaging system 10 by an external device. The signal may be received by the imaging system 10 via a Mobile Industry Processor Interface (MIPI) Interface, for example.

Regardless of how or where the control signal is generated, the pico-projector is configured to utilize the control signal to synchronize its refresh rate with the exposure time of the digital camera. Once synchronized, the digital camera can record the images being projected by the pico-projector without recording the annoying patterns that degenerate the ability of the digital-camera to detect hand gestures illuminated by the projected video image 70.

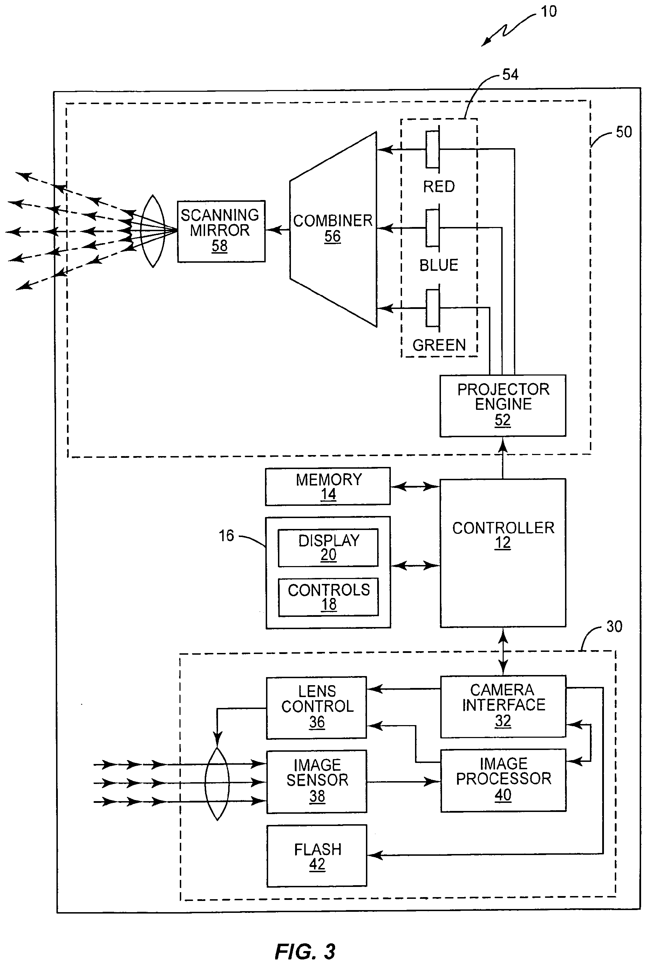

Figure 3 is a block diagram illustrating some of the component parts of imaging system 10 configured to reduce or eliminate Moire patterns according to one embodiment of the present invention. As seen in Figure 3, the imaging system 10 comprises a controller 12, a memory 14, a User Interface (Ul) 16 having user controls 18, and a display 20, as well as the digital camera 30 and a pico-projector 50. In this embodiment, the controller 12, memory 14, and the UI 16 are central to both the digital camera 30 and the pico-projector 50. Thus, each of these components serves both the digital camera 30 and the pico-projector 50. However, this is not required, and each of the digital camera 30 and pico-projector 50 may include their own such components.

The controller 12 controls the operation of imaging system 10 according to one or more programs and data stored in memory 14. In this embodiment, this includes controlling the functions of the digital camera 30 as well as those of the pico-projector 50. The controller 12 may be implemented as a single microprocessor or multiple microprocessors. Suitable microprocessors may include, for example, general purpose and special purpose microprocessors as well as digital signal processors and/or image processors. In one embodiment of the present invention, the memory 14 stores an executable program that is executed by controller 12. When executed, the program causes the controller 12 to control the pico-projector 50 to project the video image 70 onto the external display surface.

Additionally, controller 12 may be configured to control the synchronization of the refresh rate of the pico-projector 50 with the exposure time of the imaging system 10. For example, in one embodiment, controller 12 generates a control signal to send to the pico-projector 50. The control signal may comprise, for example, a timing signal that pico-projector 50 uses to synchronize its refresh rate to a start of the exposure of the digital camera 10. In another embodiment, the controller 12 generates and sends the control signal to a camera interface 32 in digital camera 30. The signal controls a lens control component 36 to increase or decrease its exposure time so as to synchronize it with the refresh rate of the pico-projector 50. Thus, synchronization may occur in the pico-projector 50 or in the digital camera 30.

Memory 14 is a computer readable medium representing the entire hierarchy of memory in imaging system 10, and may comprise both random access memory (RAM) and read-only memory (ROM). Computer program instructions and data required for operation of the digital camera 30 and/or the pico-projector 50 are stored in non-volatile memory, such as EPROM, EEPROM, and/or flash memory, while images and/or video captured by the digital camera 30 may be stored in volatile memory. Memory 14 and may be implemented, for example, as one or more discrete devices, stacked devices, or removable devices, such as a flash drive or memory stick, or may be integrated with controller 12.

The User interface (Ul) 16 generally includes one or more components that permit the user to interact with, and control the operation of, the imaging system 10. This includes the functions of both the digital camera 30 and the pico-projector 50. In this embodiment, the UI 16 includes one or more user controls 18 and a display 20. Although not specifically seen here, the UI 16 may also comprise a microphone and a speaker. The user controls 18 may comprise a variety of knobs, switches, keys, button controls, or dials, for example, distributed across the housing of the digital camera device 10. Display 20 permits users to view the status of the digital camera 30 and/or the pico-projector 50, as well as view and select menu options. Display 20 acts as a viewfinder that permits the user to preview images and video that will be captured by digital camera 30, as well as to view the images and video after they are captured.

The digital camera 30 comprises a camera interface 32, a lens 34, a lens control 36, an image sensor 38, an image processor 40, and an optional flash 42. The camera interface 32 interfaces the components of digital camera 30 to the controller 12. In one embodiment, the camera interface 32 receives commands from the controller 12, such as user commands generated using the UI 16 and control signals used for timing synchronization. Lens 34, which may comprise one or more lenses (fixed or auto-focus), and which may comprise mechanical or electronic shutters, manipulates an image by collecting and focusing light onto the image sensor 38 based on control signals received from lens control 36. Lens control 36 controls the optical properties of lens 34, such as focus, zoom, exposure time, and shutter speed, based on control signals received from controller 12 and UI 16.

Image sensor 38 captures the images formed by lens 34, and may comprise any conventional image sensor, such as a charge-coupled device (CCD), a complementary metal oxide semiconductor (CMOS) image sensor, and the like. Generally, the image sensor 38 converts light focused by lens 34 into analog electrical signals for image processor 40. When CCD devices are used, additional digital-to-analog converters may be disposed between the CCD device and the image processor 40 to convert the digital signal provided by the CCD device to an analog signal usable by the image processor 40. Image processor 40 may process this raw image data for subsequent storage in memory 14, or for output to display 20, for example.

As stated above, the controller 12 may be configured to generate the control/timing signal that is used in the synchronization process. However, the present invention is not so limited. In another embodiment, the image processor 40 generates the control signal and provides it to either the lens control 36 or the pico-projector engine 52. As described in more detail below, one or both of the image processor 40 and the pico-projector engine 52 may be configured to perform the synchronization process to reduce or eliminate the Moiré patterns. So reduced, the image processor 40 can more accurately analyze the images being recorded to detect a hand gesture.

The pico-projector 50 comprises a miniaturized projection device integrated within the housing of the digital camera 10. The pico-projector 50 functions to project digital images and/or video that are retrieved from memory 14, for example, onto a nearby viewing surface, such as a wall or movie screen. As seen in Figure 3, the pico-projector 50 comprises a projector engine 52, a laser light source 54, an optical combiner 56, one or more scanning mirrors 58, and a lens 60.

The projector engine 52 comprises the electronic circuitry required to convert received images and video data into a plurality of electronic signals, which are then used to drive the laser light source 54 to generate light. In one embodiment, the images received for projection produced using a complementary metal oxide semiconductor (CMOS) image sensor. CMOS image sensors derive intensity information using a plurality of photovoltaic cells, and filter the information through a color filter, for example, to derive color information. An image processor, such as image processor 40, then processes the color information and generates color values.

When the projector engine 52 receives an image for projection, the projector engine 52 may utilize any known technique to deconstruct the image into the plurality of electronic signals. For example, in one embodiment, the projector engine 52 analyzes this raw image data to derive the color and intensity information for each pixel in the image. The projector engine 52 then provides electronic signals representing the color and intensity information for the pixels to the laser light source 54.

The laser light source 54 comprises three miniature lasers. In this embodiment, there is one laser for each primary color - red, green, and blue. The electronic signals (i.e., the color and intensity information) received from the projector engine 52 are applied to each of the lasers in the laser light source 54. In response, each laser outputs a corresponding red light, green light, or blue light towards the optical combiner 56. The optical combiner 56 then combines the separate red, green, and blue lights into a single modulated light beam representing the derived color and intensity information for a particular pixel.

The modulated light beam is output to a scanning mirror 58, which in one embodiment, comprises a micro electro-mechanical system (MEMS) scanning mirror. As is known in the art, MEMS devices are very small mechanical devices that are driven by electricity. In the present invention, the scanning mirror 58 receives the light directed onto it by the optical combiner 56, and redirects the light beam towards the lens 60 to reproduce the image pixel by pixel on the external flat surface (e.g., the wall).

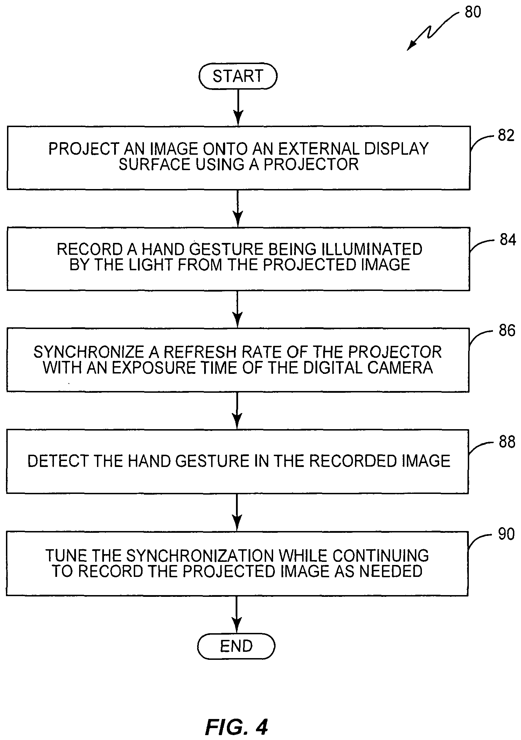

Figure 4 illustrates a method 80 of performing one embodiment of the present invention. The method seen in Figure 4 is described in the context of a single integrated device comprising both the digital camera assembly 30 and the projector assembly 50. However, those skilled in the art will appreciate that this is for illustrative purposes only.

The method 80 begins when the pico-projector 50 projects a video image 70 onto an external display surface (box 82). While the pico-projector 50 projects the video image 70, the digital camera 30 records the projected video image 70. Particularly, the digital camera 30 records a hand gesture that is being illuminated by the projected video image 70 (box 84). If the timing of the pico-projector 50 and the digital camera are out of sync, Moire patterns or other interference patterns may become visible, and thus, recorded by the digital camera 30. As stated above, the presence of such patterns interferes with the ability of the digital camera 30 to detect the hand gestures. Therefore, while the digital camera 30 continues recording, the projector engine 52 synchronizes the refresh rate of the projector 50 to the exposure time of the digital camera 30 (box 86). This synchronization reduces or eliminates the timing factors that cause the undesirable Moire patterns.

The generated control signal on which the synchronization is based can be any signal suitable for use as a timing signal. For example, in one embodiment, the control signal comprises a vertical synchronization signal (VSYNC) generated at controller 12. Conventionally, VSYNC signals are used to synchronize frame changes with a vertical blanking interval to ensure that a frame buffer begins filling with image data in sync with the VSYNC signal. This ensures that the entire frame buffer fills only with the data from a given image, and thus, only whole frames are projected onto an external surface when the buffer fills.

However, the present invention is concerned with reducing or eliminating the presence of Moire patterns to detect hand gestures. Therefore, in one embodiment of the present invention, the synchronization process utilizes the VSYNC signal to perform this function. Particularly, the VSYNC signal may be generated based on the start of the exposure of the digital camera 30 and sent to the projector engine 52. Circuitry within the projector engine 52 then synchronizes the projector's refresh rate to the VSYNC signal. A refresh rate is the number of times per second that projector engine 52 outputs the image data to the laser light source 54. Thus, in one embodiment of the present invention, the projector engine 52 synchronizes outputting the image data from the frame buffer to the laser light source based on the VSYNC signal.

When the projector engine 52 outputs the contents of the frame buffer, the laser light source 54, the optical combiner 56, and the scanning mirror 58 function to project the image data onto the external display surface. The digital camera 30 then records hand gestures illuminated by the projected image 70 and processes the recorded image to detect the presence of the hand gesture (box 88). Because the refresh rate has been synchronized to the generated VSYNC signal, which is generated, for example, based on the start of the exposure of the digital camera assembly 30, the Moire patterns are reduced or eliminated. Therefore, the image processor 40 can analyze the content of the recorded image to detect whether a hand gesture is being performed.

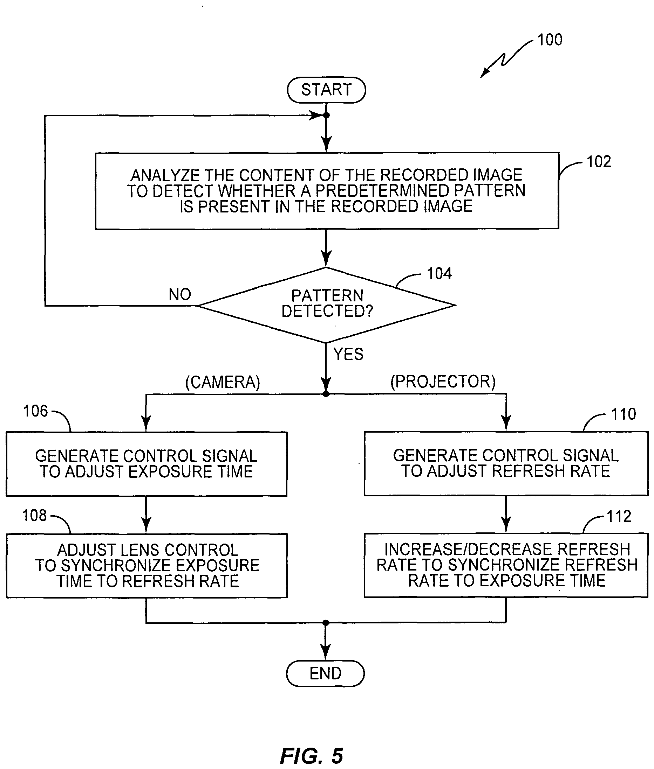

In some cases, the synchronization process may not be able to completely eliminate the Moire patterns. Therefore, in one embodiment, the present invention allows the user to tune the synchronization while the digital camera 30 continues to record the projected image (box 90). Any method known in the art may be utilized to tune the synchronization. Figure 5 illustrates one such method 100. Particularly, the image processor 40 comprises a pattern detection circuit and a reference timing circuit. The pattern detection circuit may be configured to utilize any well-known flicker detection algorithm to analyze the content of the captured images to detect periodic patterns (i.e., regions of change in multiple images of the same scene taken at different times) (box 102). If no pattern is detected (box 104), the pattern detection circuit simply continues to analyze the content of the captured images (box 102). However, when the pattern detection circuit does detect such a pattern (box 104), it may be configured to automatically adjust the synchronization in one or more ways. For example, either the digital camera 30 may synchronize its exposure time to the refresh rate of the pico-projector 50, or the pico-projector 50 may synchronize its refresh rate to the exposure time of the digital camera 30. In one embodiment, however, the image control processor 40 generates a signal indicating the detected pattern (box 106). This signal is then employed to control the lens control 36 to adjust the exposure time of the camera 10 (box 108).

In another embodiment, the pattern detection circuit cooperates with the reference timing circuit to automatically tune the synchronization. Particularly, the reference timing circuit generates the timing signal that may, as stated above, be used as the control signal at the projector engine 52. According to this embodiment of the present invention, the image processor 40 generates an adjustment control signal upon detecting a pattern (box 110). The reference timing circuit, based on this adjustment signal, then adjusts the periodicity with which the timing circuit generates the timing signal (i.e., increased or decreased) (box 112). The adjusted timing signal is then sent to the projector engine 52, as stated previously, thereby causing the projector engine 52 to increase or decrease the refresh rate of the projector engine 52.

The foregoing embodiments illustrate the imaging system 10 as comprising a unitary device that projects images captured and stored by digital camera 30. However, those skilled in the art should readily appreciate that the present invention is not so limited. For example, Figure 6 is a perspective view illustrating another embodiment of the present invention in which the imaging system 10 has a communications interface 62. Via interface 62, the imaging system 10 may receive images and/or video from an external communications device 120, such as a SMARTPHONE or a Personal Digital Assistant (PDA), for example. Upon receiving the images, the pico-projector 50 projects the images onto a wall or other flat display surface. The imaging system 10 could be configured to generate a sync signal to control the refresh rate of the projector 50 as previously discussed.

As seen in Figure 6, a cable 122 communicatively connects the imaging system 10 with the external device 120. However, this is for illustrative purposes only. In some embodiments, both the imaging system 10 and the communications device 120 are equipped with short-range transceivers, such as BLUETOOTH transceivers, to allow the bi-directional transfer of data and messages.

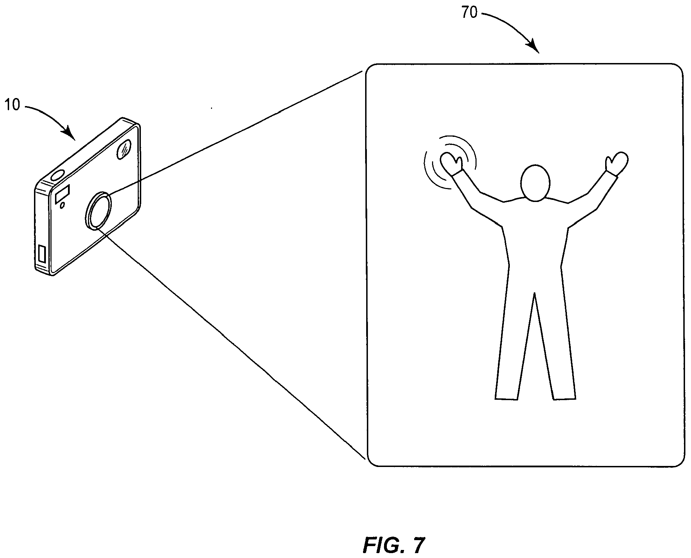

The present invention may, of course, be carried out in other ways than those specifically set forth herein without departing from essential characteristics of the invention. For example, the previous embodiments discuss the various embodiments of the present invention in which the hand gesture is illuminated by the projected image. However, in other embodiments, the digital camera 10 of the present invention may be configured to record and analyze the projected image 70 to detect the presence of a hand gesture being performed by a person in the projected image 70. Figure 7 illustrates a person in a projected image 70 waving. The digital camera 30 records the image. According to the present invention, the digital camera 30 or the pico-projector 50 synchronizes the refresh rate of the projector with the exposure time of the digital camera 30.

## Claims

1. A method (80; 100) of detecting gestures in a recorded image (70), the method comprising:
projecting (82) an image (70) onto an external display surface using a projector (50);
recording (84) a gesture illuminated by the projected image (70) using a digital camera (30);
generating a control signal for synchronizing a refresh rate of the projector with an exposure time of the digital camera (30);
synchronizing (86) the refresh rate of the projector (50) with the exposure time of the digital camera (30) using said control signal; and
detecting (88) the gesture in the recorded image (30), the method being **characterized by** further comprising tuning (90, 100) the synchronizing (86) of the refresh rate of the projector (50) with the exposure time of the digital camera (30) while projecting the image onto the external display surface, said tuning comprising: analyzing (102) a content of the recorded gesture to detect (104) whether an interference pattern is visible in the recorded gesture, and if such a pattern is detected:
generating (110) an adjusted control signal based on the generated control signal; and
adjusting (112) the synchronizing (86) of the refresh rate of the projector (50) with the exposure time of the digital camera (30) based on the adjusted control signal.

2. The method (80; 100) of claim 1 wherein generating the control signal comprises generating (106) the control signal to synchronize (108) the exposure time of a lens (34) on the digital camera (30) to the refresh rate of the projector (50).

3. The method (80; 100) of claim 1 or claim 2 wherein generating the control signal comprises generating (110) a timing signal to synchronize (112) the refresh rate of the projector (50) to the exposure time of a lens (34) on the digital camera (30).

4. The method (80; 100) of any one of claims 1-3 further comprising:
projecting the image (70) onto the external display (20) surface according to the synchronized refresh rate.

5. The method (80; 100) of any one of claims 1-4 wherein synchronizing a refresh rate of the projector (50) with an exposure time of the digital camera (30) comprises synchronizing the refresh rate of the projector (50) to a start of the exposure of the digital camera (30).

6. An imaging system (10) for detecting gestures in a recorded image (70), the image-projection device comprising:
a projector (50) configured to project an image (70) onto an external display (20) surface;
a digital camera (30) to record a gesture illuminated by the projected image (70);
an image processor (40) configured to analyze a content of the recorded image gesture;
a controller (12) connected to both the projector and the digital camera (30) and configured to:
generate a control signal for synchronizing a refresh rate of the projector with an exposure time of the digital camera (30);
synchronize the refresh rate of the projector (50) with the exposure time of the digital camera (30) using said control signal; the system being **characterized by** the controller being configured to tune the synchronization of the refresh rate of the projector (50) with the exposure time of the digital camera (30) while projecting the image onto the external display surface by using the image processor (40) to analyze the content of the recorded gesture to determine whether an interference pattern is visible in the recorded gesture; the controller being further configured to, if such a pattern is detected, generate an adjusted control signal based on the generated control signal and adjust the synchronization of the refresh rate of the projector (50) with the exposure time of the digital camera (30) based on the adjusted control signal.

7. The system (10) of claim 6 wherein the controller (12) is further configured to generate said control signal as comprising a timing signal.

8. The system (12) of claim 6 or claim 7 wherein the projector (50) is configured to generate a timing signal responsive to receiving the control signal.

9. The system (10) of any one of claims 6-8 wherein the projector comprises a pico-projector and is integrated with the digital camera as a single device.

## Patentansprüche

1. Verfahren (80, 100) zum Erkennen von Gesten in einem aufgezeichneten Bild (70), wobei das Verfahren Folgendes umfasst:
Projizieren (82) eines Bildes (70) auf eine externe Anzeigeoberfläche mittels eines Projektors (50);
Aufzeichnen (84) einer Geste, die durch das projizierte Bild (70) angestrahlt wird, mittels einer Digitalkamera (30);
Erzeugen eines Steuersignals, um eine Bildwiederholfrequenz des Projektors mit einer Belichtungsdauer der Digitalkamera (30) zu synchronisieren;
Synchronisieren (86) der Bildwiederholfrequenz des Projektors (50) mit der Belichtungsdauer der Digitalkamera (30) mittels des Steuersignals; und
Erkennen (88) der Geste im aufgezeichneten Bild (30), wobei das Verfahren **dadurch gekennzeichnet ist, dass** es ferner umfasst Abstimmen (90, 100) des Synchronisierens (86) der Bildwiederholfrequenz des Projektors (50) mit der Belichtungsdauer der Digitalkamera (30), während das Bild auf die externe Anzeigeoberfläche projiziert wird, wobei das Abstimmen umfasst:
Analysieren (102) einer Information der aufgezeichneten Geste, um zu erkennen (104), ob ein Interferenzmuster in der aufgezeichneten Geste sichtbar ist, und falls ein solches Muster erkannt wird:
Erzeugen (110) eines angepassten Steuersignals, basierend auf dem erzeugten Steuersignal; und
Anpassen (112) des Synchronisierens (86) der Bildwiederholfrequenz des Projektors (50) mit der Belichtungsdauer der Digitalkamera (30), basierend auf dem angepassten Steuersignal.

2. Verfahren (80, 100) nach Anspruch 1, wobei das Erzeugen des Steuersignals umfasst Erzeugen (106) des Steuersignals zum Synchronisieren (108) der Belichtungsdauer einer Linse (34) in der Digitalkamera (30) mit der Bildwiederholfrequenz des Projektors (50).

3. Verfahren (80, 100) nach Anspruch 1 oder 2, wobei das Erzeugen des Steuersignals das Erzeugen (110) eines Zeitsignals umfasst, das dazu dient, die Bildwiederholfrequenz des Projektors (50) mit der Belichtungsdauer einer Linse (34) in der Digitalkamera (30) zu synchronisieren (112).

4. Verfahren (80, 100) nach einem der vorhergehenden Ansprüche 1 bis 3, ferner umfassend:
Projizieren des Bildes (70) auf eine externe Anzeigeoberfläche (20) entsprechend der synchronisierten Bildwiederholfrequenz.

5. Verfahren (80, 100) nach einem der Ansprüche 1 bis 4, wobei das Synchronisieren einer Bildwiederholfrequenz des Projektors (50) mit einer Belichtungsdauer der Digitalkamera (30) das Synchronisieren der Bildwiederholfrequenz des Projektors (50) mit einem Beginn der Belichtung der Digitalkamera (30) umfasst.

6. Bildgebungssystem (10) zum Erkennen von Gesten in einem aufgezeichneten Bild (70), wobei die Bildgebungsvorrichtung umfasst:
einen Projektor (50), der so konfiguriert ist, dass er ein Bild (70) auf eine externe Anzeigeoberfläche (20) projiziert;
eine Digitalkamera (30) zum Aufzeichnen einer Geste, die vom projizierten Bild (70) angestrahlt wird;
einen Bildprozessor (40), der so konfiguriert ist, dass er eine Information der Geste im aufgezeichneten Bild analysiert;
eine Steuerung (12), die mit dem Projektor und der Digitalkamera (30) verbunden und so konfiguriert ist, dass sie:
ein Steuersignal zum Synchronisieren einer Bildwiederholfrequenz des Projektors mit einer Belichtungsdauer der Digitalkamera (30) erzeugt;
mittels des Steuersignals die Bildwiederholfrequenz des Projektors (50) mit der Belichtungsdauer der Digitalkamera (30) synchronisiert;
wobei das System **dadurch gekennzeichnet ist, dass** die Steuerung so konfiguriert ist, dass sie, während das Bild auf eine externe Anzeigeoberfläche projiziert wird, das Synchronisieren der Bildwiederholfrequenz des Projektors (50) mit der Belichtungszeit der Digitalkamera (30) abstimmt, indem sie den Bildprozessor verwendet, um die Information der aufgezeichneten Geste zu analysieren, um zu ermitteln, ob ein Interferenzmuster in der aufgezeichneten Geste sichtbar ist; und die Steuerung ferner so konfiguriert ist, dass sie, falls ein solches Interferenzmuster erkannt wird,
ein angepasstes Steuersignal erzeugt, das auf dem erzeugten Steuersignal basiert und, basierend auf dem angepassten Steuersignal, das Synchronisieren der Bildwiederholfrequenz des Projektors (50) mit der Belichtungsdauer der Digitalkamera (30) anpasst.

7. System (10) nach Anspruch 6, wobei die Steuerung (12) ferner so konfiguriert ist, dass sie das Steuersignal erzeugt, das ein Zeitsignal umfasst.

8. System (10) nach Anspruch 6 oder 7, wobei der Projektor (50) so konfiguriert ist, dass er ein Zeitsignal erzeugt, das auf das Empfangen des Steuersignals reagiert.

9. System (10) nach einem der vorhergehenden Ansprüche 6 bis 8, wobei der Projektor einen Pico-Projektor umfasst und als eine einzige Vorrichtung in die Digitalkamera integriert ist.

## Revendications

1. Procédé (80 ; 100) de détection de gestes sur une image enregistrée (70), le procédé comprenant les étapes consistant à :
projeter (82) une image (70) sur une surface de dispositif d'affichage externe en utilisant un projecteur (50) ;
enregistrer (84) un geste éclairé par l'image projetée (70) en utilisant un appareil photo numérique (30) ;
générer un signal de commande pour synchroniser un taux de rafraîchissement du projecteur avec un temps d'exposition de l'appareil photo numérique (30) ;
synchroniser (86) le taux de rafraîchissement du projecteur (50) avec le temps d'exposition de l'appareil photo numérique (30) en utilisant ledit signal de commande ; et
détecter (88) le geste sur l'image enregistrée (30),
le procédé étant **caractérisé en ce qu'**il comprend en outre l'étape consistant à accorder (90, 100) la synchronisation (86) du taux de rafraîchissement du projecteur (50) avec le temps d'exposition de l'appareil photo numérique (30) tout en projetant l'image sur la surface de dispositif d'affichage externe, ledit accord comprenant :
l'analyse (102) d'un contenu du geste enregistré pour détecter (104) si un motif d'interférence est visible dans le geste enregistré, et si un tel motif est détecté :
la génération (110) d'un signal de commande ajusté sur la base du signal de commande généré ; et
l'ajustement (112) de la synchronisation (86) du taux de rafraîchissement du projecteur (50) avec le temps d'exposition de l'appareil photo numérique (30) sur la base du signal de commande ajusté.

2. Procédé (80 ; 100) selon la revendication 1, dans lequel la génération du signal de commande comprend la génération (106) du signal de commande pour synchroniser (108) le temps d'exposition d'un objectif (34) sur l'appareil photo numérique (30) avec le taux de rafraîchissement du projecteur (50).

3. Procédé (80 ; 100) selon la revendication 1 ou la revendication 2, dans lequel la génération du signal de commande comprend la génération (110) d'un signal de temporisation pour synchroniser (112) le taux de rafraîchissement du projecteur (50) avec le temps d'exposition d'un objectif (34) sur l'appareil photo numérique (30).

4. Procédé (80 ; 100) selon l'une quelconque des revendications 1 à 3, comprenant en outre l'étape consistant à :
projeter l'image (70) sur la surface de dispositif d'affichage externe (20) en fonction du taux de rafraîchissement synchronisé.

5. Procédé (80 ; 100) selon l'une quelconque des revendications 1 à 4, dans lequel la synchronisation d'un taux de rafraîchissement du projecteur (50) avec un temps d'exposition de l'appareil photo numérique (30) comprend la synchronisation du taux de rafraîchissement du projecteur (50) avec le début de l'exposition de l'appareil photo numérique (30).

6. Système de formation d'image (10) destiné à la détection de gestes sur une image enregistrée (70), le dispositif de projection d'image comprenant :
un projecteur (50) configuré pour projeter une image (70) sur une surface de dispositif d'affichage externe (20) ;
un appareil photo numérique (30) pour enregistrer un geste éclairé par l'image projetée (70) ;
un processeur d'image (40) configuré pour analyser un contenu du geste d'image enregistré ;
une unité de commande (12) connectée à la fois au projecteur et à l'appareil photo numérique (30) et configurée pour :
générer un signal de commande pour synchroniser un taux de rafraîchissement du projecteur avec un temps d'exposition de l'appareil photo numérique (30) ;
synchroniser le taux de rafraîchissement du projecteur (50) avec le temps d'exposition de l'appareil photo numérique (30) en utilisant ledit signal de commande ;
le système étant **caractérisé en ce que** l'unité de commande est configurée pour
accorder la synchronisation du taux de rafraîchissement du projecteur (50) avec le temps d'exposition de l'appareil photo numérique (30) tout en projetant l'image sur la surface de dispositif d'affichage externe en utilisant le processeur d'image (40) pour analyser le contenu du geste enregistré pour déterminer si un motif d'interférence est visible dans le geste enregistré ;
l'unité de commande étant en outre configurée pour, si un tel motif est détecté,
générer un signal de commande ajusté sur la base du signal de commande généré et ajuster la synchronisation du taux de rafraîchissement du projecteur (50) avec le temps d'exposition de l'appareil photo numérique (30) sur la base du signal de commande ajusté.

7. Système (10) selon la revendication 6, dans lequel
l'unité de commande (12) est en outre configurée pour générer ledit signal de commande comme comprenant un signal de temporisation.

8. Système (12) selon la revendication 6 ou la revendication 7 dans lequel
le projecteur (50) est configuré pour générer un signal de temporisation en réponse à la réception du signal de commande.

9. Système (10) selon l'une quelconque des revendications 6 à 8, dans lequel le projecteur comprend un pico-projecteur et est intégré à l'appareil photo numérique en tant que dispositif unique.
